# EUROPEAN PATENT APPLICATION

(11) **EP 4 765 723 A1**
(43) Date of publication of application: **24.06.2026**
(21) Application number: 24868725.3
(22) Date of filing: 20.09.2024
(51) Int. Cl.: H04L 9/08

(54) **METHOD AND APPARATUS FOR CONTROLLING MOBILE QUANTUM KEY DISTRIBUTION FOR MULTI-USER QUANTUM CRYPTOGRAPHY COMMUNICATION**

(30) Priority: 22.09.2023 KR 20230126687
(71) Applicant: Qsimplus Co., Ltd., Seoul 04534 (KR)
(72) Inventor: NOH, Kwang Seok, Seoul 01429 (KR); SHIN, You Chul, Hanam-si Gyeonggi-do 13013 (KR); HEO, Jun, Seoul 06359 (KR)
(74) Representative: BCKIP Part mbB
(86) International application number: PCT/KR2024/014216
(87) International publication number: WO 2025/063749

(57) **Abstract**

A quantum key distribution control apparatus according to an embodiment may perform operations of: acquiring, from a first node belonging to a first node group managed by the quantum key distribution control apparatus, a request for quantum key distribution to a second node belonging to a second node group; acquiring information about an external quantum key distribution control apparatus for managing the second node; determining, within the first node group, a third node connectable to the second node; generating a first quantum key between the second node and the third node by requesting the external quantum key distribution control apparatus for quantum key distribution between the second node and the third node; moving a mobile node belonging to the first node group to the position of the third node to control generation of a first combined key in which the first quantum key is combined with a second quantum key between the mobile node and the third node; and moving the mobile node to the position of the first node to control generation of a second combined key in which the first combined key is combined with a third quantum key between the first node and the third node.

## Description

### TECHNICAL FIELD

The present invention relates to quantum cryptography and quantum key distribution, and relates to a technique for implementing quantum key distribution among multiple users by controlling a mobile quantum key distribution node in a quantum cryptography environment.

### BACKGROUND ART

Quantum cryptography is a technique of transmitting and receiving information between two nodes while maintaining security, using quantum properties such as quantum entanglement and quantum superposition, and it is conveniently used to securely process information exchange in an environment that requires high security, such as finance, military, government organization, or the like.

One of key techniques that makes the quantum cryptography possible is quantum key distribution (hereinafter, referred to as QKD), and the QKD technique plays a key role when two nodes securely share secret keys without external interference.

When existing public key encryption methods are methods that provide security on the basis of mathematical complexity, the QKD technique fundamentally makes it possible to securely distribute secret keys by utilizing physical characteristics of quantum, in which information is changed by external interference itself.

Meanwhile, existing QKD techniques are mainly implemented through wired networks based on optical cables. Although these networks have the advantage of being relatively stable and highly secure, the existing QKD techniques have some limitations.

First, since the existing QKD techniques are mainly based on wired networks, there is a problem in that significant cost and time are required for physical installation and operation. For example, equipment for connection between nodes should be installed at fixed locations to implement a QKD system through optical cables, and there is a limitation in that it can be used only within an indoor or limited space.

In addition, the existing QKD techniques have a problem of lacking in scalability in a multi-user environment. Specifically, since the QKD techniques are designed on the basis of 1:1 communication, when a plurality of users utilizes quantum cryptography at the same time, each user should install an independent key distribution device in a 1:1 connection relationship. This has a problem in that it is very inefficient in a multi-user environment, such as a large building or smart city.

These limitations of the existing QKD techniques act as a major factor that hinders wide adoption of quantum cryptography, and particularly make it difficult to utilize the quantum cryptography in various indoor and outdoor environments where mobility is required.

Accordingly, it is required to provide a technique that can implement secure and efficient quantum cryptography in a multi-user environment, while overcoming the limitation in mobility and scalability of the existing QKD techniques.

### <Prior Art Literature - Patent Documents>

Korean Patent Registration No. 10-2609578
Korean Patent Publication No. 10-2023-0156588

### <Prior Art Literature - Non-Patent Documents>

Standards of Telecommunications Technique Association (TTA): Quantum key distribution security requirements (TTAK.KO-12.0356/R1)
Standards of Telecommunications Technique Association (TTA): Test methods for verifying security requirements of quantum key distribution equipment (TTAK.KO-12.0409)
Standards of Telecommunications Technique Association (TTA): Security requirements and test methods for postprocessing of quantum key distribution (TTAK.KO-12.0406)

### DISCLOSURE OF INVENTION

### TECHNICAL PROBLEM

Therefore, the present invention has been made in view of the above problems, and it is an object of the present invention to overcome the limitation in mobility of existing QKD techniques. The existing QKD techniques use optical cables based on wires having limitations in mobility, and has a problem of requiring significant cost and time for physical installation and operation. Due to these characteristics, utilization of quantum cryptography has been limited unless a separate wired connection is installed between nodes that do not have a 1:1 connection. Accordingly, the present invention is provided to solve the mobility problem of the existing QKD by controlling a mobile QKD node having a QKD module mounted on a mobile device such as a robot to distribute the quantum key of a fixed QKD node so that quantum communication can be used flexibly in various environments.

In addition, another object of the present invention is to solve the scalability problem in a multi-user environment. Since the QKD technique is designed on the basis of 1:1 communication, when a plurality of users simultaneously uses quantum cryptography in a multi-user environment, each user should be provided with an independent key distribution device in a 1:1 connection relationship, and thus the technique has a limitation in expanding efficiently. Accordingly, the present invention is provided to implement an environment that maximizes network scalability by connecting a plurality of fixed QKD nodes on the basis of control of a mobile QKD node.

Meanwhile, the technical problems of the present invention are not limited to the technical problems mentioned above, and unmentioned other technical problems can be clearly understood by those skilled in the art from the following description.

### TECHNICAL SOLUTION

To accomplish the above objects, according to one aspect of the present invention, there is provided a method performed by a quantum key distribution control apparatus operated by a processor, the method comprising the operations of: acquiring, from a first node belonging to a first node group managed by the quantum key distribution control apparatus, a request for distributing a quantum key to a second node belonging to a second node group; acquiring information on an external quantum key distribution control apparatus for managing the second node; determining a third node that can be connected to the second node within the first node group; generating a first quantum key between the second node and the third node by requesting the external quantum key distribution control apparatus to distribute the quantum key between the second node and the third node; controlling a mobile node belonging to the first node group to move to a position of the third node to generate a first combined key that combines a second quantum key between the mobile node and the third node with the first quantum key; and controlling the mobile node to move to a position of the first node to generate a second combined key that combines a third quantum key between the first node and the third node with the first combined key.

In addition, the method may further comprise an operation of storing information on the node group before the operation of acquiring the quantum key distribution request.

In addition, information on the node group may include information on nodes belonging to the first node group, information on nodes sharing the quantum key with each other in the first node group, metadata on the quantum key of the nodes belonging to the first node group, external nodes that can be connected to the nodes belonging to the first node group, and information on the external quantum key distribution control apparatus for managing the external nodes.

In addition, the mobile node may include a mobile robot equipped with a Quantum Key Distribution (QKD) wireless module that performs generation of a quantum key or distribution of a combined key on the basis of QKD through wireless quantum cryptography based on optical alignment through Line of Sight (LOS).

In addition, the mobile node may generate the first combined key and the second combined key on the basis of a one-time pad algorithm.

In addition, the method may further comprise, after the operation of generating the second combined key, an operation of transmitting the second combined key to the second node by way of the third node through the mobile node on the basis of quantum cryptography.

In addition, the method may further comprise, after the operation of controlling to generate the second combined key, an operation of controlling the mobile node to delete the first combined key or the second combined key.

In addition, the method may further comprise, after the operation of controlling to generate the second combined key, the operations of: controlling the mobile node to delete the second combined key; acquiring a request for distributing the quantum key to the second node from a fourth node belonging to the first node group managed by the control apparatus; and controlling the mobile node to move to a position of the fourth node to generate a third combined key that combines a fourth quantum key between the fourth node and the third node with the first combined key.

In addition, the method may further comprise, after the operation of controlling to generate the third combined key, an operation of controlling the mobile node to delete the first combined key or the third combined key.

According to another aspect of the present invention, there is provided a quantum key distribution control apparatus comprising: a memory including instructions; and a processor that performs a predetermined operation based on the instructions, wherein the operation of the processor includes the operations of: acquiring, from a first node belonging to a first node group managed by the quantum key distribution control apparatus, a request for distributing a quantum key to a second node belonging to a second node group; acquiring information on an external quantum key distribution control apparatus for managing the second node; determining a third node that can be connected to the second node within the first node group; generating a first quantum key between the second node and the third node by requesting the external quantum key distribution control apparatus to distribute the quantum key between the second node and the third node; controlling a mobile node belonging to the first node group to move to a position of the third node to generate a first combined key that combines a second quantum key between the mobile node and the third node with the first quantum key; and controlling the mobile node to move to a position of the first node to generate a second combined key that combines a third quantum key between the first node and the third node with the first combined key.

### ADVANTAGEOUS EFFECTS

The present invention provides an effect of greatly improving the scope and efficiency of applying quantum cryptography by solving the problems of mobility and scalability in existing QKD techniques on the basis of control of a mobile QKD node.

Specifically, the present invention may provide a function of distributing quantum keys by controlling a mobile QKD node to physically move to the position of a user or a device. Through the function, it is possible to overcome the limitation in mobility of existing fixed QKD nodes, and the user may securely use quantum cryptography in an indoor and outdoor environment where the user may move freely. For example, even when a user or a device moves in a hospital, smart office, factory, or the like, secure communication can be maintained as quantum key distribution is performed smoothly.

In addition, the present invention may maximize scalability in a multi-user environment. Since the QKD technique is designed on the basis of 1:1 communication, when a plurality of users simultaneously uses quantum cryptography in a multi-user environment, each user should be provided with an independent key distribution device in a 1:1 connection relationship, and this is inefficient in some aspects. However, the present invention allows quantum keys to be efficiently distributed to and managed by a plurality of users within a network by indirectly connecting nodes in different node groups, as well as a plurality of fixed QKD nodes, through control of a mobile QKD node. Therefore, the present invention has an effect of enhancing scalability of a QKD system in a multi-user environment by controlling key distribution between a plurality of QKD nodes at a center.

Accordingly, the present invention may expand the scope of utilizing quantum communication and provide secure communication in various indoor and outdoor environments by providing a quantum cryptography system improving the mobility and scalability of the QKD technique. Therefore, the present invention may facilitate commercialization and popularization of quantum cryptography and provide strong security to more users.

Meanwhile, the effects of the present invention are not limited to those mentioned above, and unmentioned other technical effects will be clearly understood by those skilled in the art from the following descriptions.

### BRIEF DESCRIPTION OF THE DRAWINGS

FIG. 1 is a view showing the configuration of a quantum key distribution system according to an embodiment.
FIG. 2 is an exemplary view showing a node group managed by a quantum key distribution control apparatus according to an embodiment.
FIG. 3 is a view showing the configuration of a quantum key distribution control apparatus according to an embodiment.
FIG. 4 is a flowchart illustrating the operation performed by a quantum key distribution control apparatus according to an embodiment.
FIG. 5 is an exemplary view showing the operation of generating quantum keys and combined keys according to an embodiment.
FIG. 6 is an exemplary view showing the operation of performing quantum key distribution by a fourth node and a second node after quantum key distribution is performed by a first node and a second node according to an embodiment.
FIG. 7 is an exemplary view showing the operation of generating a third combined key by utilizing a temporarily stored first combined key by a mobile node according to an embodiment.

### BEST MODE FOR CARRYING OUT THE INVENTION

Details of the objects and technical configurations of the present invention and operational effects according thereto will be more clearly understood by the following detailed description based on the drawings attached in the specification of the present invention. An embodiment according to the present invention will be described in detail with reference to the accompanying drawings.

The embodiments disclosed in this specification should not be construed or used as limiting the scope of the present invention. For those skilled in the art, it is natural that the description including the embodiments of the present specification have various applications. Accordingly, any embodiments described in the detailed description of the present invention are illustrative for better describing of the present invention, and are not intended to limit the scope of the present invention to the embodiments.

The functional blocks shown in the drawings and described below are merely examples of possible implementations. Other functional blocks may be used in other implementations without departing from the spirit and scope of the detailed description. In addition, although one or more functional blocks of the present invention are expressed as separate blocks, one or more of the functional blocks of the present invention may be combinations of various hardware and software configurations that perform the same function.

In addition, the expressions including certain components are expressions of "open type" and only refer to existence of corresponding components, and should not be construed as excluding additional components.

Furthermore, when a certain component is referred to as being "connected" or "coupled" to another component, it may be directly connected or coupled to another component, but it should be understood that other components may exist in between.

Hereinafter, various embodiments of the present invention will be described with reference to the accompanying drawings. However, it should be understood that this is not intended to limit the present invention to specific embodiments, but to include various modifications, equivalents, and/or alternatives of the embodiments of the present invention.

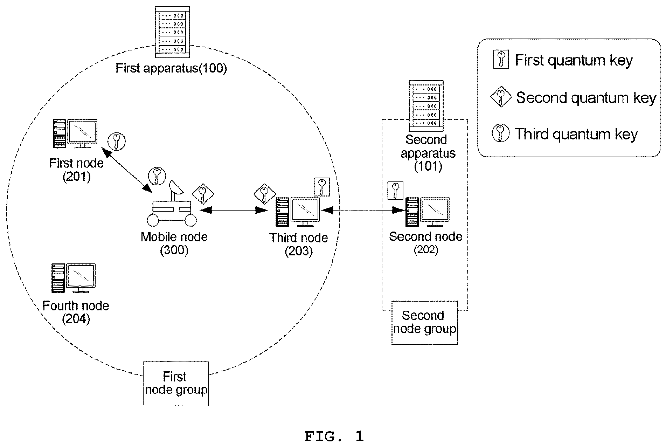

FIG. 1 is a view showing the configuration of a quantum key distribution system 10 according to an embodiment.

Referring to FIG. 1, the quantum key distribution system 10 may include a first quantum key distribution control apparatus 100, a second quantum key distribution control apparatus 101, a first node 201, a second node 202, a third node 203, a fourth node 204, and a mobile node 300.

Hereinafter, the 'first quantum key distribution control apparatus 100' will be referred to as a 'control apparatus 100' or a 'first control apparatus 100', and the 'second quantum key distribution control apparatus 101' will be referred to as a 'second control apparatus 101'.

In an embodiment of the present invention, the quantum key distribution system 10 is a system that securely shares encryption keys between two nodes using a quantum key distribution (QKD) technique, and this is a system that may detect hacking attempts when there is a hacking attempt and maintain security according to the principles of quantum mechanics.

The QKD technique is designed to generate and share a unique secret key one-to-one only between two nodes to maximize security through the principles of quantum mechanics. The reason that the quantum key is distributed one-to-one between two nodes comes out from the fundamental characteristics of the QKD technique. The QKD technique distributes the quantum key one-to-one to prevent hacking as the quantum key is transformed as soon as hacking is detected, using the characteristic that the quantum is transformed at the moment when an external observer attempts to measure the quantum state. As described, the one-to-one quantum key distribution is a mechanism needed to guarantee thoroughly secured key exchange between nodes. Meanwhile, in the overall content of the embodiments of this document, a quantum key generation method between nodes and a quantum cryptography method using the quantum key may use known techniques, e.g., the standard technique of the Telecommunications Technique Association (TTA) in Korea.

The quantum key distribution system 10 may be configured of control apparatuses 100 and 101 that control and manage a node group of a preset unit, and nodes 201, 202, 203, 204, and 300 managed by each of the control apparatuses 100 and 101. Each control apparatus 100 may communicate with a separate apparatus 101 that manages an external group other than the node group managed by the control apparatus itself. The control apparatus 100 is generally also referred to as a 'QKD node controller'.

Meanwhile, a node group may be configured of a plurality of nodes that perform quantum cryptography using the QKD technique. A node may share a quantum key (= secret key) with a counterpart node in a one-to-one manner. In the embodiments of this document, the node may include a quantum key distribution device (QKD) that transmits a quantum key to QKMS, a quantum key management system (QKMS) that receives a quantum key from a counterpart node, performs key management by connecting to the QKMS of a neighboring node via a QKMS link, and supplies a key for encrypted communication to QENC, and a quantum communication encryption device (QENC) that receives a key from the QKMS and performs encrypted communication. In the following description, for the convenience of understanding, operations that can be performed by any one of the QKD, QKMS, and QENC will be inclusively described as the operation of the nodes 201, 202, 203, 204, and 300.

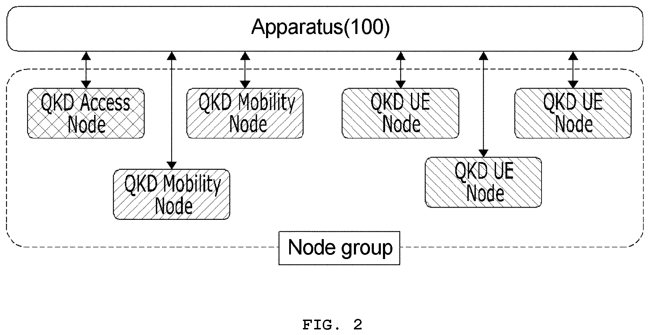

FIG. 2 is an exemplary view showing a node group managed by the control apparatus 100 according to an embodiment.

Referring to FIG. 2, a node group may include a network environment configured of various types of nodes, such as a QKD access node, a QKD mobility node, and a QKD UE node, and the control apparatus 100 may supervise all key distribution operations occurring in this node group. The control apparatus 100 maintains security of the entire network and guarantees optimal performance by setting a path between nodes as needed and adjusting the priority of key distribution.

The QKD UE node is a user device that receives or generates quantum keys to protect each user's data. The QKD UE node is responsible for quantum key distribution mainly at an end point of a network, such as a user terminal or an Internet of Things (IoT) device, and is used to encrypt personal information or confidential data. The QKD UE node may receive necessary quantum keys on the network through the QKD mobility node or the QKD access node, and provide secure communication between user devices. The QKD UE node may include a first node 201 and a fourth node 204 described below.

The QKD mobility node is a mobile node that can distribute quantum keys to a plurality of fixed nodes while moving physically. The QKD mobility node may move freely in an indoor and outdoor environment, and exchange keys with fixed nodes through optical alignment through Line of Sight (LoS). As the QKD mobility node may sequentially perform key distribution between a plurality of users or devices, it may act as an element that can overcome the spatial constraint of existing fixed-type QKD equipment. The QKD mobility node may include the mobile node 300 described below.

The QKD access node is a node responsible for connection to the outside in a network and may relay quantum key distribution to external devices 101 or other networks. Through this, keys may be securely received from the outside of the network or transmitted to the outside. The QKD access node may include the third node 203 described below.

Referring to FIG. 1 again, the first control apparatus 100 manages the first node group, and the first node group may include the first node 201, the third node 203, the fourth node 204, and the mobile node 300. Each node performs encrypted communication by distributing quantum keys on the QKD network, and may maintain secure communication between the nodes.

The second control apparatus 101 manages the second node group, and the second node group may include the second node 202. The second control apparatus 101 forms a network separate from the first control apparatus 100, and may independently generate and manage quantum keys between the nodes in the second node group.

In addition, the first control apparatus 100 and the second control apparatus 101 may control quantum key distribution between nodes belonging to each node group in association with each other when quantum key distribution between the nodes belonging to each node group is required.

The first node 201, the second node 202, the third node 203, and the fourth node 204 in FIG. 1 are fixed QKD nodes and may include a computing device difficult to physically move unless an external force is applied. For example, although the first node 201, the second node 202, the third node 203, and the fourth node 204 may be implemented in the form of a computer device, a portable communication device, a smartphone, a portable multimedia device, a laptop computer, a tablet PC, or the like, they are not limited to these examples.

The mobile node 300 in FIG. 1 is a computing device that can move by itself, and may perform a function of relaying quantum key distribution. For example, the mobile node 300 may include a mobile robot equipped with a QKD wireless module that performs generation of quantum keys or distribution of combined keys on the basis of QKD. The mobile node 300 may wirelessly distribute quantum keys to other nodes through optical alignment. The technique of wirelessly distributing quantum keys by the mobile node is a known technique, and optical alignment technique based on Line of Sight (LoS) may be used. The optical alignment technique helps stable communication through photons by accurately aligning the optical path between two nodes.

Meanwhile, since the QKD technique is designed on the basis of the one-to-one quantum key distribution method as described above, when there are constraints in the physical movement like a fixed node or when quantum cryptography is used between a plurality of nodes in a compound manner, an independent key distribution device should be installed in each node to create a 1:1 connection relation. For example, when quantum cryptography should be used from the first node to the second node in FIG. 1, conventionally, an independent key distribution device should be installed in each node from the first node to the second node in a 1:1 connection relationship. This has a problem in that it is very inefficient in an environment having a plurality of users, such as a large building or a smart city.

To solve this problem, the present invention provides a method of connecting the fixed nodes 201, 202, 203, and 204 and the mobile nodes 300 to propose a techniques that can solve the mobility problem of existing QKD techniques and maximize network scalability by connecting a plurality of nodes so that quantum communication can be flexibly used in various environments.

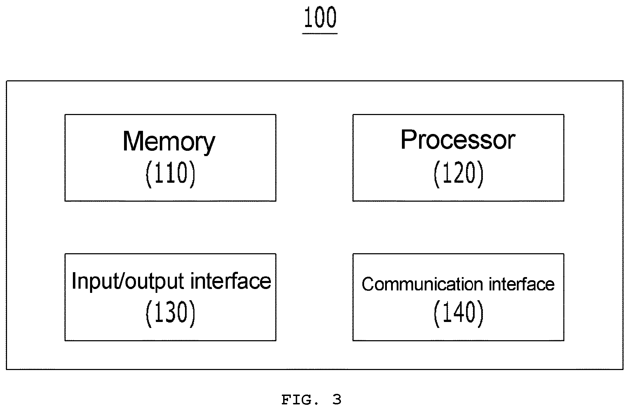

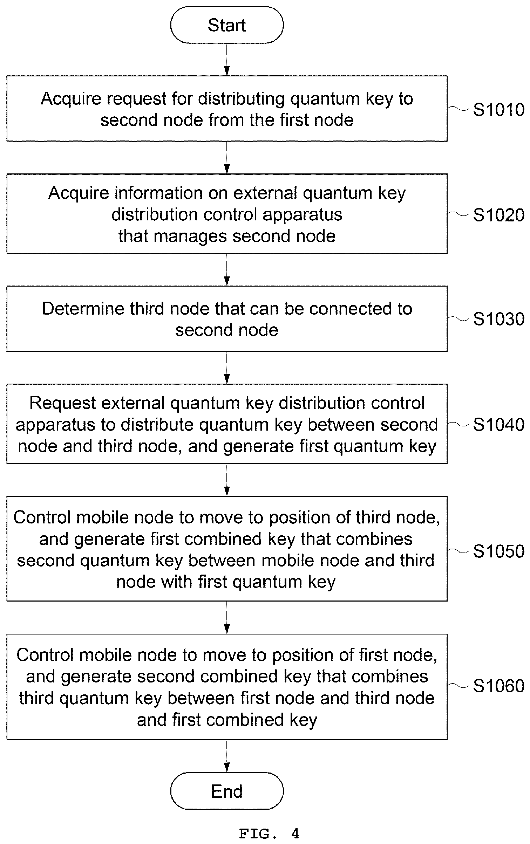

Hereinafter, the configuration of the control apparatus 100 for achieving these objects is described with reference to FIG. 3, and specific operations performed by the control apparatus 100 are described with reference to FIGS. 4 to 7.

FIG. 3 is a view showing the configuration of the control apparatus 100 according to an embodiment.

Referring to FIG. 3, the control apparatus 100 according to an embodiment may include a memory 110, a processor 120, an input/output interface 130, and a communication interface 140.

The memory 110 may store data acquired from an external device or data generated by itself. The memory 110 may store instructions that may execute operations of the processor 120. The memory 110 may store information on node groups that it manages.

The memory 110 may store information on the node group in advance before performing the operation of FIG. 4 described below. For example, information on the node group may include information on the nodes belonging to the node group, information on the nodes sharing quantum keys with each other in the node group, metadata on quantum keys of the nodes belonging to the node group, external nodes that can be connected to the nodes belonging to the node group, and information on an external quantum key distribution control apparatus for managing the external nodes.

The processor 120 is a computing device that controls the overall operation. The processor 120 may execute instructions stored in the memory 110. The operation of the control apparatus 100 according to the embodiment of this document may be understood as an operation performed by the processor 120.

The input/output interface 130 may include a hardware interface or a software interface for inputting or outputting information.

The communication interface 140 allows transmission and reception of information through a communication network. To this end, the communication interface 140 may include a wireless communication module or a wired communication module. For example, the communication interface 140 may transmit and receive information to and from the nodes 201, 202, 203, 204, and 300 included in the first node group. The communication interface 140 may transmit and receive information to and from a separate control apparatus (e.g., the second control apparatus 101) that manages an external node group (e.g., the second node group).

The control apparatus 100 may be implemented as a variety of devices capable of performing the operations through the processor 120 and transmitting and receiving information through a network. For example, the control apparatus 100 may be implemented as a server, a computer device, a portable communication device, a smartphone, a portable multimedia device, a laptop computer, a tablet PC, or the like, but it is not limited to these examples.

FIG. 4 is a flowchart illustrating the operation performed by the control apparatus 100 according to an embodiment.

Each step disclosed in FIG. 4 is merely a preferred embodiment in achieving the objects of the present invention, and some steps may be added or deleted as needed, and any one step may be included and performed in another step. The order of each operation disclosed in FIG. 4 is arranged only for convenience of understanding, and this order is not limited to a time-series order, and the order may be changed to operate in a different way according to the choice of the designer.

Referring to FIG. 4, at step S1010, the first control apparatus 100 may acquire a request for distributing a quantum key to the second node 202 from the first node 201. Here, the quantum key refers to a quantum key of QKD technique, and as the first node 201 requests the first control apparatus 100 to distribute a quantum key to a specific node, a quantum key is generated and distributed under the control of the first control apparatus 100.

Meanwhile, in the embodiment of this document, it is assumed that one-to-one wired communication or one-to-one wireless communication is not allowed between the first node 201 and the second node 202, and in this case, a new method of distributing quantum keys between the first node 201 and the second node 202 by controlling the mobile node 300 is proposed.

Referring to FIGS. 1 and 4 together, the first node 201 belongs to the first node group managed by the first control apparatus 100, and the second node 202 means a node belonging to the second node group managed by the second control apparatus 101. For example, the first node 201 may be a node belonging to a secured network internal to the company, and the second node 202 may be a node belonging to the network of an external partner company.

Here, the first control apparatus 100 and the second control apparatus 101 are apparatuses having the configuration as shown in FIG. 3, and are referred to using the modifiers 'first' and 'second' to distinguish the functions they perform on the basis of the first node group and the second node group that each of the apparatuses manages.

That is, at step S1010, the first node 201 requests the first control apparatus 100 to distribute a quantum key for quantum cryptography with the second node 202, and the first control apparatus 100 processes this request. According thereto, the first control apparatus 100 may manage to accomplish quantum key distribution on the basis of information such as node information, quantum key use amount, and the like in the first node group.

For example, when the first node 201 desires to generate a quantum key with the second node 202 for the first time or when the quantum key use amount is exhausted and the first node 201 determines that a new quantum key with the second node 202 is needed, the first node 201 may request the first control apparatus 100 to distribute a quantum key to the second node 202, and the first control apparatus 100 may search for a path to the second node 202 and perform a key distribution procedure according to the operations described below.

At step S1020, the first control apparatus 100 may acquire information on the second control apparatus 101 that manages the second node 202. For example, the first control apparatus 100 may acquire the path to the second node 202 and information on the second control apparatus 101 that manages the second node group, to which the second node 202 belongs, with reference to information on node groups that the first control apparatus 100 stores in itself. For example, the first control apparatus 100 may request and acquire the path to the second node 202 and information on the second control apparatus 101 (e.g., IP address, key distribution protocol, network state, etc.) that manages the second node group, to which the second node 202 belongs, from an external server (e.g., link manager) that manages information on the nodes in the entire network and paths between the nodes in the entire network.

At step S1030, the first control apparatus 100 may determine the third node 203 in the first node group as a node for connecting to the second node 202 of the second node group with reference to the acquired path to the second node 202 and information on the second control apparatus 101. Here, the third node 203 acts as an intermediate node located on the quantum key distribution path between the first node 201 and the second node 202.

That is, step S1030 is a task of searching for an optimal path for quantum key distribution among several nodes in the first node group, and the first control apparatus 100 may determine the third node 203 to set a most efficient and secure path by monitoring the quantum key distribution state in the node group. For example, the first control apparatus 100 may determine a node, of which the sum of the distance between a specific node and the first node 201 and the distance between the specific node and the second node 202 is physically closest, as the third node 203. Alternatively, the first control apparatus 100 may determine a node, for which a network link capable of one-to-one quantum cryptography with the second node group is constructed in advance, as the third node 203.

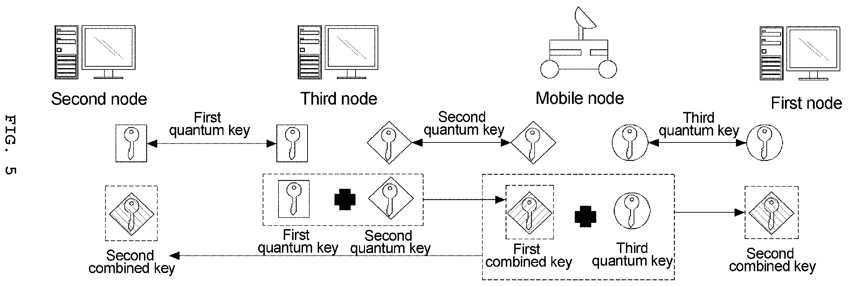

FIG. 5 is an exemplary view showing the operation of generating quantum keys and combined keys according to an embodiment. Hereinafter, steps S1040 to S1060 will be described with reference to FIG. 4 and FIG. 5 together.

Referring to FIGS. 4 and 5 together, at step S1040, the first control apparatus 100 requests the second control apparatus 101 to distribute a quantum key between the second node 202 and the third node 203, and the first control apparatus 100 may generate a first quantum key between the second node 202 and the third node 203. For example, the first quantum key shared between the second node 202 and the third node 203 may be generated and distributed on the basis of the standard technique of the Telecommunications Technique Association (TTA) in Korea.

At step S1050, the first control apparatus 100 may control the mobile node 300 to move to the position of the third node 203 and perform wireless quantum cryptography, and control the mobile node 300 to generate a first combined key that combines the second quantum key between the mobile node 300 and the third node 203 with the first quantum key between the second node 202 and the third node 203.

The mobile node 300 of step S1050 is a computing device that may move by itself as described in FIG. 1, and may perform a function of relaying quantum key distribution through wireless quantum cryptography. For example, the mobile node 300 may include a mobile robot equipped with a QKD wireless module that performs generation of a quantum key or distribution of a combined key on the basis of wireless QKD.

The second quantum key of step S1050 is a quantum key shared between the mobile node 300 and the third node 203, and may be generated and distributed on the basis of the standard technique of the Telecommunications Technique Association (TTA) in Korea. In some embodiments, the second quantum key may be generated between the mobile node 300 and the third node 203 before step S1050 and stored in each node. In addition, in some embodiments, the second quantum key may be newly generated at the time point when the mobile node 300 moves to and communicates at the position of the third node 203 at step S1050.

The first combined key of step S1050 may be generated by combining the first quantum key and the second quantum key on the basis of a predetermined combining algorithm. For example, the mobile node 300 may generate and temporarily store the first combined key by combining the first quantum key and the second quantum key on the basis of a one-time pad algorithm. At this point, since the first combined key is a key generated by combining the first quantum key and the second quantum key generated using the QKD technique, a high level of security may be maintained.

At step S1060, the first control apparatus 100 may control the mobile node 300 to move to the position of the first node 201 and perform wireless quantum cryptography, and control the mobile node 300 to generate a second combined key that combines a third quantum key between the first node 201 and the third node 203 and the first combined key generated at step S1050.

The mobile node 300 of step S1060 is a computing device that may move by itself as described in FIG. 1, and may perform a function of relaying quantum key distribution through wireless quantum cryptography. For example, the mobile node 300 may include a mobile robot equipped with a QKD wireless module that performs generation of a quantum key or distribution of a combined key on the basis of wireless QKD.

The third quantum key of step S1060 is a quantum key shared between the mobile node 300 and the first node 201, and may be generated and distributed on the basis of the standard technique of the Telecommunications Technique Association (TTA) in Korea. In some embodiments, the third quantum key may be generated between the mobile node 300 and the third node 203 before step S1060 and stored in each node. In addition, in some embodiments, the third quantum key may be newly generated at the time point when the mobile node 300 moves to and communicates at the position of the third node 203 at step S1060.

The second combined key of step S1060 may be generated by combining the first combined key and the third quantum key on the basis of a predetermined combining algorithm. For example, the mobile node 300 may generate and temporarily store the second combined key by combining the first combined key and the third quantum key on the basis of a one-time pad algorithm. At this point, since the second combined key is a key generated by combining the first combined key and the third quantum key generated using the QKD technique, a high level of security may be maintained.

Accordingly, the first control apparatus 100 may control the first node 201 to acquire and store the second combined key from the mobile node 300. In addition, the first control apparatus 100 may control the mobile node 300 so that the second node 202 may store the second combined key through the third node 203. For example, transmission of the second combined key by the mobile node 300 may be accomplished on the basis of quantum cryptography according to the standards of the Telecommunications Technique Association (TTA) in Korea. In addition, the first control apparatus 100 may transmit information on the second combined key (e.g., metadata on the second combined key, etc.) to the second control apparatus 101 so that the second control apparatus 101 may manage information on the second combined key.

Meanwhile, after performing steps S1010 to S1060 described above, the first control apparatus 100 may control the mobile node 300 to delete the first combined key or the second combined key temporarily stored in the mobile node 300.

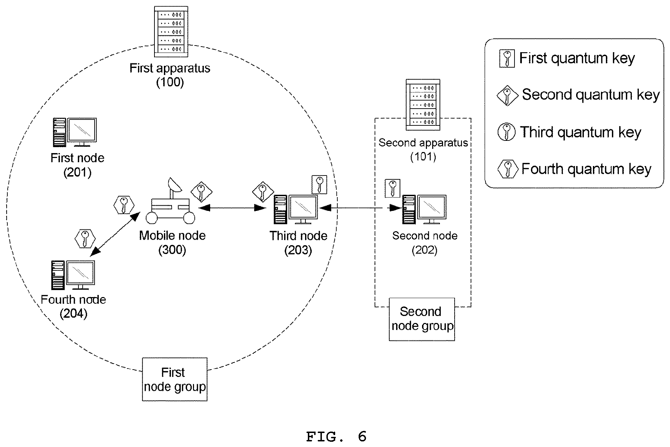

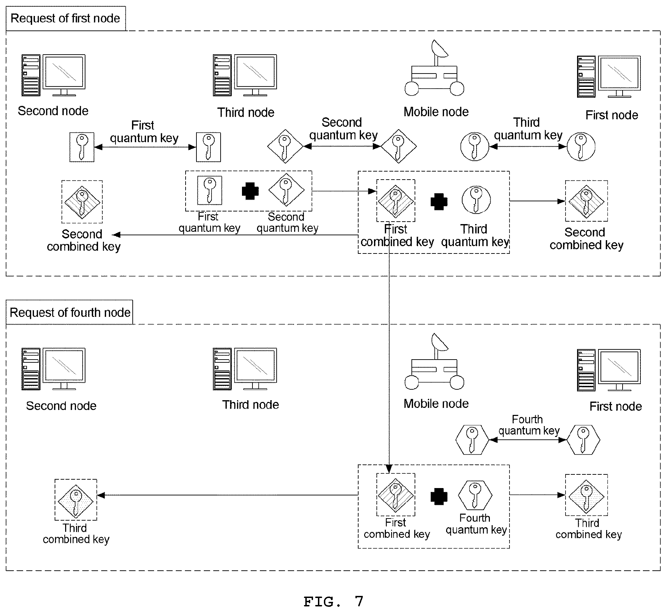

In some embodiments, the first control apparatus 100 controls the mobile node 300 to delete the temporarily stored second combined key, but not to delete the first combined key immediately, and when another node in the first node group requests distribution of a quantum key to the second node 202 within a preset time, it may perform the embodiments shown in the FIGS. 6 and 7 in a manner of reusing the temporarily stored first combined key.

FIG. 6 is an exemplary view showing the operation of performing quantum key distribution by a fourth node 204 and a second node 202 after quantum key distribution is performed by a first node 201 and a second node 202 according to an embodiment, and FIG. 7 is an exemplary view showing the operation of generating a third combined key by utilizing a temporarily stored first combined key by a mobile node 300 according to an embodiment.

That is, FIGS. 6 and 7 show an embodiment in which the fourth node 204 requests the first control apparatus 100 to distribute a quantum key to the second node 202 within a preset time after steps S1010 to S1060 in FIG. 4 described above are performed. Here, the preset time refers to the time period during which the mobile node 300 temporarily stores the first combined key, and may be set differently according to control of the control apparatus 100. Here, it is assumed that one-to-one wired communication or one-to-one wireless communication is not allowed between the fourth node 204 and the second node 202.

Referring to FIGS. 6 and 7 together, the first control apparatus 100 may acquire a request for distributing a quantum key to the second node 202 from the fourth node 204 belonging to the first node group. At this point, since the first control apparatus 100 knows that the mobile node 300 temporarily store the first combined key generated between the second node 202 and the third node 203, when the quantum key is distributed between the fourth node 204 and the second node 202, it may perform the operation by omitting the operations shown in steps S1020 to S1050.

That is, since the mobile node 300 temporarily stores the first combined key generated between the second node 202 and the third node 203, the first control apparatus 100 may control the mobile node 300 to move to the fourth node 204 and perform wireless quantum cryptography, and control the mobile node 300 to generate the third combined key that combines a fourth quantum key and the first combined key between the fourth node 204 and the third node 203.

For example, the mobile node 300 may generate the third combined key by combining the first combined key and the fourth quantum key on the basis of a one-time pad algorithm. At this point, since the third combined key is a key generated by combining the first combined key and the fourth quantum key generated using the QKD technique, a high level of security may be maintained.

Accordingly, the first control apparatus 100 may control the fourth node 204 to acquire and store the third combined key from the mobile node 300. In addition, the first control apparatus 100 may control the mobile node 300 so that the second node 202 may store the third combined key through the third node 203. For example, transmission of the third combined key by the mobile node 300 may be accomplished on the basis of quantum cryptography according to the standards of the Telecommunications Technique Association (TTA) in Korea. In addition, the first control apparatus 100 may transmit information on the third combined key (e.g., metadata on the third combined key, etc.) to the second control apparatus 101 so that the second control apparatus 101 may manage information on the third combined key.

Thereafter, the first control apparatus 100 may control the mobile node 300 so that the first combined key or the fourth combined key temporarily stored in the mobile node 300 is deleted.

According to the embodiment described above, the present invention provides an effect of greatly improving the scope and efficiency of applying quantum cryptography by solving the problems of mobility and scalability in existing QKD techniques on the basis of control of a mobile QKD node.

Specifically, the present invention may provide a function of distributing quantum keys by controlling a mobile QKD node to physically move to the position of a user or a device. Through the function, it is possible to overcome the limitation in mobility of existing fixed QKD nodes, and the user may securely use quantum cryptography in an indoor and outdoor environment where the user may move freely. For example, even when a user or a device moves in a hospital, smart office, factory, or the like, secure communication can be maintained as quantum key distribution is performed smoothly.

In addition, the present invention may maximize scalability in a multi-user environment. Since the QKD technique is designed on the basis of 1:1 communication, when a plurality of users simultaneously uses quantum cryptography in a multi-user environment, each user should be provided with an independent key distribution device in a 1:1 connection relationship, and this is inefficient in some aspects. However, the present invention allows quantum keys to be efficiently distributed to and managed by a plurality of users within a network by indirectly connecting nodes in different node groups, as well as a plurality of fixed QKD nodes, through control of a mobile QKD node. Therefore, the present invention has an effect of enhancing scalability of a QKD system in a multi-user environment by controlling key distribution between a plurality of QKD nodes at a center.

Accordingly, the present invention may expand the scope of utilizing quantum communication and provide secure communication in various indoor and outdoor environments by providing a quantum cryptography system improving the mobility and scalability of the QKD technique. Therefore, the present invention may facilitate commercialization and popularization of quantum cryptography and provide strong security to more users.

It should be understood that various embodiments of this document and the terms used herein are not intended to limit the technical features described in this document to specific embodiments, but include various modifications, equivalents, or substitutes of the embodiments. In connection with the description of drawings, similar reference numerals may be used for similar or related components. The singular form of a noun corresponding to an item may include one or more items, unless the related context clearly indicates otherwise.

In this document, each of phrases such as "A or B", "at least one among A and B", "at least either A or B", "A, B, or C", "at least one among A, B, and C", and "at least either A, B, or C" may include all possible combinations of the items listed together in a corresponding phrase among the phrases. Terms such as "1st", "2nd", "first", or "second" may be used only to distinguish a corresponding component from another corresponding component, and do not limit the components in any other aspect (e.g., importance or order). When a certain (e.g., a first) component is referred to as being"coupled" or "connected" to another (e.g., a second) component with or without a term such as "functionally" or "communicatively", it means that the component may be connected to another component directly (e.g., wired), wirelessly, or through a third component.

The term "module" used in this document may include a unit implemented in hardware, software, or firmware, and may be used interchangeably with terms such as logic, logic block, part, or circuit. A module may be an integrally configured component, or a minimum unit of a component or a portion thereof that performs one or more functions. For example, according to an embodiment, a module may be implemented in the form of an application-specific integrated circuit (ASIC).

Various embodiments of this document may be implemented as software (e.g., a program) including one or more instructions stored in a storage medium (e.g., a memory) that can be read by a device (e.g., an electronic device). The storage medium may include a random-access memory (RAM), a memory buffer, a hard drive, a database, an erasable programmable read-only memory (EPROM), an electrically erasable read-only memory (EEPROM), a read-only memory (ROM), and/or the like.

In addition, the processor in the embodiments of this document may call at least one instruction among one or more stored instructions from the storage medium and execute the instruction. This allows the device to operate to perform at least one function according to the called at least one instruction. The one or more instructions may include a code generated by a compiler or a code that can be executed by an interpreter. The processor may be a general-purpose processor, a Field Programmable Gate Array (FPGA), an Application Specific Integrated Circuit (ASIC), a Digital Signal Processor (DSP), and/or the like.

The storage medium that can be read by a device may be provided in the form of a non-transitory storage medium. Here, 'non-transitory' only means that the storage medium is a tangible device and does not include signals (e.g., electromagnetic waves), and this term does not distinguish the cases where data is stored semi-permanently on the storage medium from the cases where data is stored temporarily.

The method according to various embodiments disclosed in this document may be provided to be included in a computer program product. The computer program product may be traded between a seller and a buyer as goods. The computer program product may be distributed in the form of a machine-readable storage medium (e.g., a compact disc read only memory (CD-ROM)), or may be distributed online (e.g., downloaded or uploaded) through an application store (e.g., Play Store) or directly distributed between two user devices (e.g., smartphones). In the case of online distribution, at least a part of the computer program product may be at least temporarily stored in a machine-readable storage medium, such as a memory of a manufacturer's server, an application store's server, or a server, or may be temporarily generated.

According to various embodiments, each component (e.g., a module or a program) of the components described above may include a single or a plurality of entities. According to various embodiments, one or more of the components or operations of the components described above may be omitted, or one or more other components or operations may be added. Alternatively or additionally, a plurality of components (e.g., modules or a programs) may be integrated into a single component. In this case, the integrated component may perform one or more functions of each of the plurality of components in a way identical or similar to those performed by the corresponding component among the plurality of components before the integration. According to various embodiments, the operations performed by the modules, programs, or other components may be executed sequentially, in parallel, repeatedly, or heuristically, or one or more of the operations may be executed in a different order or omitted, or one or more other operations may be added.

### DESCRIPTION OF SYMBOLS

10: Quantum key distribution system
100: Quantum key distribution control apparatus, First quantum key distribution control apparatus
101: Second quantum key distribution control apparatus
110: Memory
120: Processor
130: Input/Output interface
140: Communication interface
201: First node
202: Second node
203: Third node
204: Fourth node
300: Mobile node

## Claims

1. A method performed by a quantum key distribution control apparatus operated by a processor, the method comprising the operations of:
acquiring, from a first node belonging to a first node group managed by the quantum key distribution control apparatus, a request for distributing a quantum key to a second node belonging to a second node group;
acquiring information on an external quantum key distribution control apparatus for managing the second node;
determining a third node that can be connected to the second node within the first node group;
generating a first quantum key between the second node and the third node by requesting the external quantum key distribution control apparatus to distribute the quantum key between the second node and the third node;
controlling a mobile node belonging to the first node group to move to a position of the third node to generate a first combined key that combines a second quantum key between the mobile node and the third node with the first quantum key; and
controlling the mobile node to move to a position of the first node to generate a second combined key that combines a third quantum key between the first node and the third node with the first combined key.

2. The method according to claim 1, further comprising an operation of storing information on the node group before the operation of acquiring the quantum key distribution request.

3. The method according to claim 2, wherein information on the node group includes information on nodes belonging to the first node group, information on nodes sharing the quantum key with each other in the first node group, metadata on the quantum key of the nodes belonging to the first node group, external nodes that can be connected to the nodes belonging to the first node group, and information on the external quantum key distribution control apparatus for managing the external nodes.

4. The method according to claim 1, wherein the mobile node includes a mobile robot equipped with a Quantum Key Distribution (QKD) wireless module that performs generation of a quantum key or distribution of a combined key on the basis of QKD through wireless quantum cryptography based on optical alignment through Line of Sight (LOS).

5. The method according to claim 1, wherein the mobile node generates the first combined key and the second combined key on the basis of a one-time pad algorithm.

6. The method according to claim 1, further comprising, after the operation of generating the second combined key, an operation of transmitting the second combined key to the second node by way of the third node through the mobile node on the basis of quantum cryptography.

7. The method according to claim 1, further comprising, after the operation of controlling to generate the second combined key, an operation of controlling the mobile node to delete the first combined key or the second combined key.

8. The method according to claim 1, further comprising, after the operation of controlling to generate the second combined key, the operations of:
controlling the mobile node to delete the second combined key;
acquiring a request for distributing the quantum key to the second node from a fourth node belonging to the first node group managed by the control apparatus; and
controlling the mobile node to move to a position of the fourth node to generate a third combined key that combines a fourth quantum key between the fourth node and the third node with the first combined key.

9. The method according to claim 8, further comprising, after the operation of controlling to generate the third combined key, an operation of controlling the mobile node to delete the first combined key or the third combined key.

10. A quantum key distribution control apparatus comprising:
a memory including instructions; and
a processor that performs a predetermined operation based on the instructions, wherein
the operation of the processor includes the operations of:
acquiring, from a first node belonging to a first node group managed by the quantum key distribution control apparatus, a request for distributing a quantum key to a second node belonging to a second node group;
acquiring information on an external quantum key distribution control apparatus for managing the second node;
determining a third node that can be connected to the second node within the first node group;
generating a first quantum key between the second node and the third node by requesting the external quantum key distribution control apparatus to distribute the quantum key between the second node and the third node;
controlling a mobile node belonging to the first node group to move to a position of the third node to generate a first combined key that combines a second quantum key between the mobile node and the third node with the first quantum key; and
controlling the mobile node to move to a position of the first node to generate a second combined key that combines a third quantum key between the first node and the third node with the first combined key.
